# EUROPEAN PATENT SPECIFICATION

(11) **EP 1 156 937 B1**
(45) Date of publication and mention of the grant of the patent: **23.04.2003**
(21) Application number: 99905809.2
(22) Date of filing: 05.02.1999
(51) Int. Cl.: B60C 17/00, B60C 9/09

(54) **DISCONTINUOUS PLY FOR RUNFLAT TIRE CONSTRUCTION**
UNTERBROCHENE SCHICHT FÜR SICHERHEITSREIFEN KONSTRUKTION
CEINTURE DISCONTINUE POUR STRUCTURE DE PNEU A AFFAISSEMENT LIMITE

(43) Date of publication of application: 28.11.2001
(73) Proprietor: THE GOODYEAR TIRE & RUBBER COMPANY, Akron, Ohio 44316-0001 (US)
(72) Inventor: KOEUNE, Jean-Marie, B-6600 Bastogne (BE); LAHURE, Jean-Claude, L-1329 Luxembourg (LU); FRAIPONT, Xavier, B-6690 Vielsalm (BE)
(74) Representative: Leitz, Paul
(86) International application number: US9902562
(87) International publication number: WO00046048

(56) References cited:
- EP-A- 0 385 192
- EP-A- 0 822 105
- US-A- 3 464 477
- US-A- 4 287 924
- US-A- 5 427 166
- US-A- 5 511 599
- PATENT ABSTRACTS OF JAPAN vol. 096, no. 003, 29 March 1996 (1996-03-29) & JP 07 304312 A (BRIDGESTONE CORP), 21 November 1995 (1995-11-21)
- PATENT ABSTRACTS OF JAPAN vol. 016, no. 446 (M-1311), 17 September 1992 (1992-09-17) & JP 04 154411 A (SUMITOMO RUBBER IND LTD), 27 May 1992 (1992-05-27)

## Description

### TECHNICAL FIELD

The present invention relates to the construction of pneumatic radial ply runflat tires and particularly to a ply component of the tire.

### BACKGROUND OF THE INVENTION

Various methods have been devised for enabling the safe continued operation of unpressurized or underpressurized vehicle tires with the intent of minimizing further damage to the uninflated tire and without simultaneously compromising vehicle handling over a distance from the place where the tire has lost its pressure to a place desired by the driver, such as a service station, where the tire can be changed. Loss of tire pressure can, of course, result from a variety of causes, including puncture by a foreign object such as a nail or other sharp object piercing the pneumatic tire installed on a vehicle.

Pneumatic tires designed for sustained operation under conditions of no pressure or underpressurization are also called runflat tires, as they are capable of being driven, or "running," while uninflated, or in what is generally called a "flat" condition.

The conventional pneumatic tire, when uninflated, collapses upon itself when it is carrying the wheel loading of a vehicle. The tire's sidewalls buckle outward in the region where the tread contacts the ground, making the tire "flat."

Runflat tires are also called extended mobility tires, the latter phrase being compressed to EMT, which is a term of art. A tire designed for runflat or EMT operation is designed such that the tire structure alone, and in particular the structure of the sidewalls, has sufficient strength and rigidity to support the vehicle's wheel load and provide adequate vehicle handling when the tire is not inflated. The sidewalls and internal surfaces of EMT tires do not collapse or buckle onto themselves. Such tires do not typically contain or use other supporting structures or devices to prevent the collapse into a flattened condition due to loss of tire pressure.

Among the many examples of runflat tires is a tire described in U.S. Pat. No. 4,111,249, entitled the "Banded Tire," in which a hoop or annular band, approximately as wide as the tread, is circumferentially deployed beneath the tread. The hoop in combination with the rest of the tire structure could support the vehicle weight in the uninflated condition.

Another approach toward EMT or runflat technology has been simply to strengthen the sidewalls by increasing their cross-sectional thickness. That is, runflat tires incorporate sidewalls that are thicker and/or stiffer so that the tire's load can be carried by an uninflated tire with minimum adverse effects upon the tire itself and upon vehicle handling until such reasonable time as the tire can be repaired or replaced. However, due to the large amounts of rubber required to stiffen the sidewall members, cyclical flexural heating during runflat operation becomes a major factor in tire failure. This is especially so when the uninflated tire is operated for high speeds and the cyclical flexure rate is correspondingly high. Pirelli discloses an example of a runflat tire design having thickened sidewalls in European Pat. Pub. No. 0-475-258A1.

Typical methods used in sidewall thickening and stiffening include the incorporation of circumferentially disposed "wedge inserts" within the concave inner peripheral surface of the sidewall portion of the carcass, which is the region in the tire usually having the lowest resistance to deformation under vertical loading. The wedge inserts, which are often referred to simply as inserts, are usually crescent shaped in cross-sectional views. The incorporation of one or more wedge inserts within each sidewall of a tire thickens the sidewalls substantially. Sidewall thickness in the region between the bead and the tread shoulder is often nearly uniform, when viewed in cross section.

U.S. Pat. No. 5,368,082, by Oare et al, having a common assignee, discloses a low-aspect-ratio, runflat pneumatic radial ply tire which employs wedge inserts in the sidewalls. Approximately six additional pounds of weight per tire was required to support an 800 lb load in this uninflated tire. This invention, although superior to prior attempts at runflat tire design, imposed a weight penalty. Fortunately, that weight penalty could be offset by the elimination of a spare tire and the tire jack. However, this weight penalty becomes even more problematic in the design of tires having higher aspect ratios and in tires designed for high performance.

U.S. Patents Nos. 5,427,166 and 5,511,599 to Walter L. Willard, Jr., disclose the addition of a third ply and the addition of a third insert in the sidewall of a runflat tire to theoretically further increase the runflat performance of the tire over that of the 5,368,182 patent. The Willard patents discuss some of the load relationships that occur in the uninflated condition of the tire and demonstrate that the Oare et al. concept can be applied to additional numbers of plies and inserts.

In general, runflat tire design is predicated upon the installation of reinforcing inserts inside each sidewall flex area. The inserts in each sidewall, in combination with the plies, add rigidity to the sidewalls in the absence of air pressure during runflat operation. The 5,368,082 patent teaches a sidewall construction for runflat tires in which the tire is constructed with two plies, an inner liner and two reinforcing wedge inserts in each sidewall. The two inserts in each sidewall are disposed such that one insert is located between the two plies while the other insert is located between the inner liner and the first or innermost ply.

While the high resistance to compression deflection of the inserts provides the necessary resistance to the collapse of the uninflated loaded tire, the use of multiple plies and more than one reinforcing wedge insert in each sidewall has drawbacks which include the above mentioned increase in tire weight and flexure-induced heat build up. Such designs also increase the tire's complexity in ways that adversely affect manufacturing operations and quality control.

U.S. Patent No. 4,287,924, by Deck et al, corresponding with the preamble of claims 1, places a two part reinforcing wedge inside the carcass which is described as: "a support member (20) of lenticular section, made of an elastomer and extending from the vicinity of the beads (12) to below the edges of the belt... [and] constituted by two parts with different flexibility...." In order to promote evacuation of the heat produced in the thick part of the supporting shaped parts (20), means are provided which consist of a heat-conducting sheet or layer (28) embedded in the body of shaped parts (20) and extending at least to the vicinity of beads (12). Preferably the layer extends over the whole height of shaped parts (20), from the upper part of the side walls adjacent to the belt of crown (23) to the vicinity of the beads. The layer (28) is advantageously disposed between the two parts of shaped part (20), and can be constituted for example by flexible parallel metallic cords extending along the radial planes of the tire.

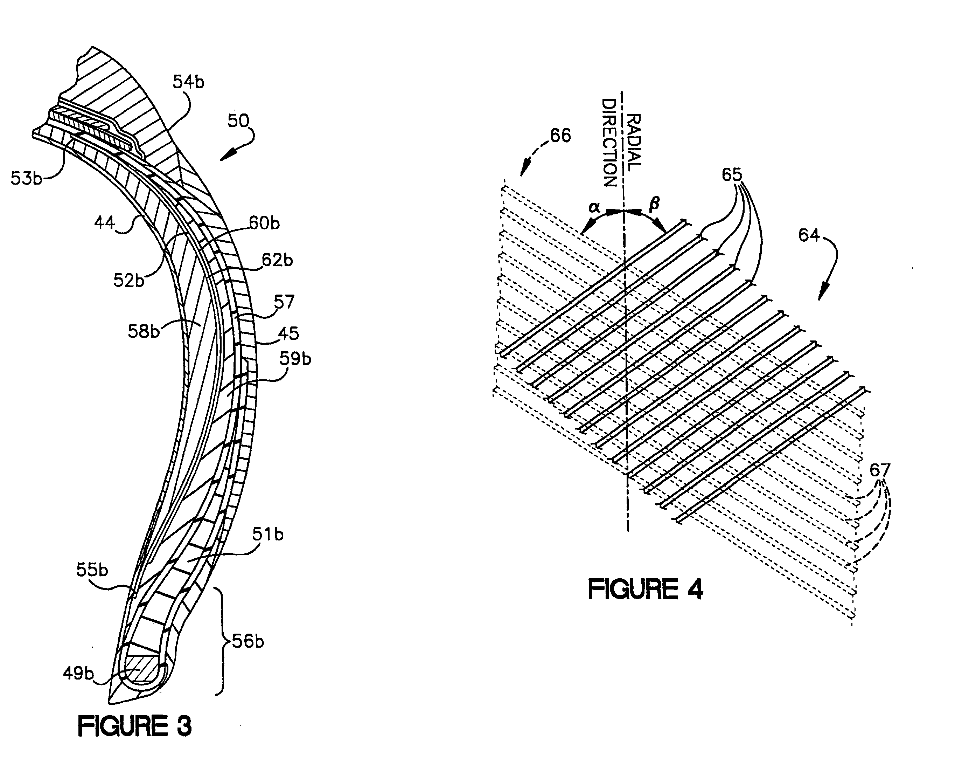

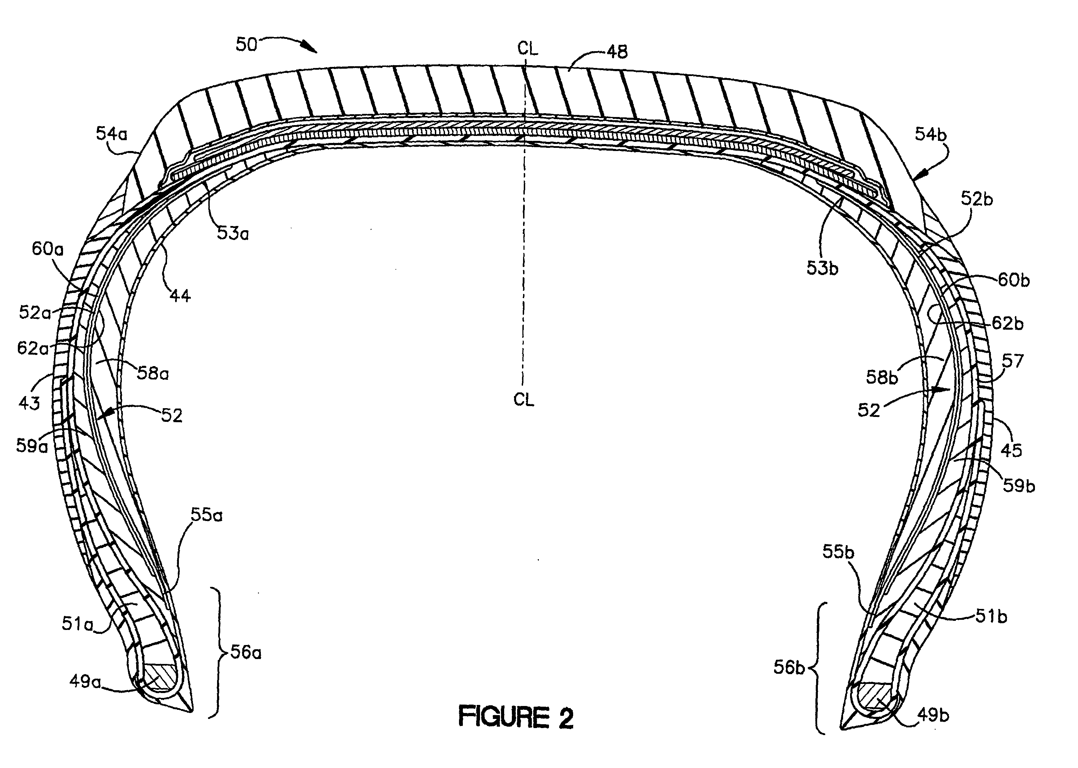

European Patent Application No. EP 0 822 105 A2, by Walter et al (Michelin), comprises a plurality of crescent-shaped reinforcing members (5) and a plurality of carcass layers (6), and provides first and second partial carcass layers (62,64) along with a filler rubber portion (24) and a second crescent-shaped reinforcing member (56). In the Walter application's Fig. 4, it can be determined that the placement of elements in the sidewall, from the inside out, is: innerliner (44), first crescent-shaped reinforcing member (54), inner carcass layer (68), second crescent-shaped reinforcing member (56), first partial carcass layer (62), filler rubber portion (24), second partial carcass layer (64), and outer sidewall (42). The filler rubber portion is placed above the bead similar to an apex. Fig. 6 shows a variation with a different shaped filler rubber portion (24a), but still places the wedges (54,56) on either side of the inner carcass layer, and places the partial carcass layers (62,64) axially outside of the [complete] carcass layer (68). The partial carcass layers extend from the vicinity of the bead up under the crown region to a specified distance (L1) axially inside of the edge of the tread belt. As best it can be determined, the partial carcass layers are comprised of standard carcass ply materials.

In summary, the goals in runflat tire design are to provide a low-cost, light-weight tires that give good runflat vehicle handling as well as good service life during runflat operation. Accordingly, the considerations that must be taken into account in runflat tire design include the use of minimal additional material to the tire (to achieve the desired sidewall stiffness) as well as minimal additional steps in the manufacturing process.

Among the design considerations for EMT or runflat technology is the nature of the sidewall loading and corresponding stresses that arise during runflat operation. For example, during runflat operation, the insert-reinforced sidewalls still undergo an outward or axial buckling (though not to the extreme extent of an uninflated non-runflat tire) in the region adjacent to where the tire's tread makes contact with the road. Such "loading" of the sidewalls causes them to deform in such a way that the outermost portions of the sidewalls, including especially the outermost carcass plies, experience tensile stresses. At the same time, the innermost portions of the insert-reinforced sidewalls, e.g., the portions of each wedge insert that lie closest to the tire's innerliner, experience large increases in compressive stresses. This combination of tensile and compressive stresses is also cyclical as the tire rotates. It follows that as the vehicle moves faster, the rate of flexural heat buildup increases.

### OBJECTS OF THE INVENTION

It is an object of the present invention to provide a runflat radial tire as defined in one or more of the appended claims and, as such, having the capability of being constructed to accomplish one or more of the following subsidiary objects.

One object of the present invention is to provide a runflat radial tire having a minimum number of components and requiring fewer manufacturing steps than prior art designs.

Another object of the present invention is to provide a runflat radial tire having a simplified ply structure that reduces the overall tire weight.

Another object of the present invention is to provide a runflat radial tire whose simplified manufacturing sequence allows for improved manufacturing quality control.

Yet another object of the present invention is to provide a runflat tire having good normal inflation handling characteristics as well as good runflat handling properties and runflat operational service life.

Still another object of the present invention is to apply the inventive concept to a variety of alternative tire sizes and aspect ratios.

### SUMMARY OF THE INVENTION

The present invention relates to a pneumatic radial ply runflat tire as recited in the claims.

### BRIEF DESCRIPTION OF THE DRAWINGS

The structure, operation, and advantages of the invention will become further apparent upon consideration of the following description taken in conjunction with the accompanying drawings, wherein:
**FIGURE 1** is a cross-sectional view of a prior art runflat tire design incorporating two wedge inserts in each sidewall and two plies in the ply structure;
**FIGURE 2** is a cross-sectional view of a tire containing the present invention;
**FIGURE 3** is a cross-sectional view of a two-layer non-metallic fabric reinforced ply according to a first embodiment of the invention;
**FIGURE 4** shows the orientation of the reinforcing cords in the view of the embodiment shown in **FIGURE 3**; and
**FIGURE 5** is a cross-sectional view of an embodiment of the invention in which the tire's main carcass ply employs the locked tie-in construction method.

### DEFINITIONS

"Apex" refers to an elastomeric filler located radially above the bead core and between the plies and the turnup plies.

"Aspect ratio" means the ratio of the section height of a tire to its section width; also refers to the cross-sectional profile of the tire; a low-profile tire, for example, has a low aspect ratio.

"Axial" and "axially" means the lines or directions that are parallel to the axis of rotation of the tire.

"Bead" or "bead core" generally means that part of the tire comprising an annular tensile member of radially inner beads that are associated with holding the tire to the rim; the beads being wrapped by ply cords and shaped, with or without other reinforcement elements such as flippers, chippers, apexes or fillers, toe guards and chafers.

"Belt structure" or "reinforcement belts" or "belt package" means at least two annular layers or plies of parallel cords, woven or unwoven, underlying the tread, unanchored to the bead, and having both left and right cord angles in the range from 18° to 30° relative to the equatorial plane of the tire.

"Breakers" or "tire breakers" means the same as belt or belt structure or reinforcement belts.

"Carcass" means the tire structure apart from the belt structure, tread, undertread over the plies and the sidewalls, but including the beads, plies, and, in the case of EMT or runflat tires, the wedge inserts sidewall reinforcements.

"Casing" means the carcass, belt structure, beads, sidewalls and all other components of the tire excepting the tread and undertread.

"Circumferential" most often means circular lines or directions extending along the perimeter of the surface of the annular tread perpendicular to the axial direction; it can also refer to the direction of the sets of adjacent circular curves whose radii define the axial curvature of the tread, as viewed in cross section.

"Cord" means one of the reinforcement strands, including fibers or metal or fabric, with which the plies and belts are reinforced.

"Crown" or "tire crown" means the tread, tread shoulders and the immediately adjacent portions of the sidewalls.

"Equatorial plane" means the plane perpendicular to the tire's axis of rotation and passing through the center of its tread; or the plane containing the circumferential centerline of the tread. "Footprint" means the contact patch or area of contact of the tire tread with a flat surface at zero speed and under normal load and pressure.

"Gauge" refers to thickness.

"Inner liner" means the layer or layers of elastomer or other material that form the inside surface of a tubeless tire and that contain the inflating fluid within the tire.

"Insert" means the crescent- or wedge-shaped reinforcement typically used to reinforce the sidewalls of runflat-type tires; it also refers to the elastomeric non-crescent-shaped insert that underlies the tread; it is also called a "wedge insert."

"Lateral" means a direction parallel to the axial direction.

"Normal inflation pressure" means the specific design inflation pressure at a specified load assigned by the appropriate standards organization for the service condition for the tire.

"Normal load" means the specific design inflation pressure and load assigned by the appropriate standards organization for the service condition for the tire.

"Ply" means a cord-reinforced layer of rubber-coated radially deployed or otherwise parallel cords.

"Radial" and "radially" mean directions radially toward or away from the axis of rotation of the tire.

"Radial ply structure" means the one or more carcass plies or which at least one ply has reinforcing cords oriented at an angle of between 65° and 90° with respect to the equatorial plane of the tire.

"Radial ply tire" means a belted or circumferentially-restricted pneumatic tire in which at least one ply has cords which extend from bead to bead are laid at cord angles between 65° and 90° with respect to the equatorial plane of the tire.

"Section height" means the radial distance from the nominal rim diameter to the outer diameter of the tire at its equatorial plane.

"Section width" means the maximum linear distance parallel to the axis of the tire and between the exterior of its sidewalls when and after it has been inflated at normal pressure for 24 hours, but unloaded, excluding elevations of the sidewalls due to labeling, decoration or protective bands.

"Shoulder" means the upper portion of sidewall just below the tread edge.

"Sidewall" means that portion of a tire between the tread and the bead.

"Tangential" and "tangentially" refer to segments of circular curves that intersect at a point through which can be drawn a single line that is mutually tangential to both circular segments.

"Toe guard" refers to the circumferentially deployed elastomeric rim-contacting portion of the tire axially inward of each bead.

"Tread cap" refers to the tread and the underlying material into which the tread pattern is molded.

"Tread width" means the arc length of the tread surface in the plane includes the axis of rotation of the tire.

"Wedge insert" means the same as "insert."

### DETAILED DESCRIPTION OF THE PREFERRED EMBODIMENT

### Prior Art Embodiment

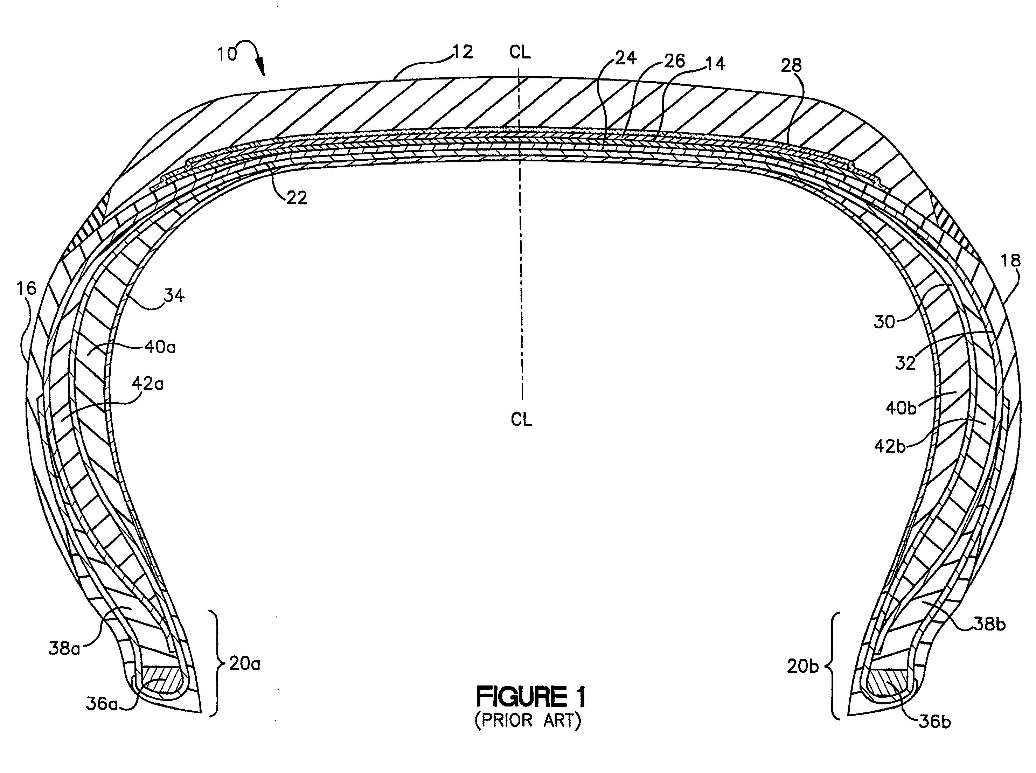

With reference to **FIGURE 1**, a cross-sectional view of a typical prior art, pneumatic radial runflat tire **10**. The tire **10** has a tread **12,** sidewalls **16,18**, a belt structure **14** comprising belts **24,26,** a fabric overlay **28** disposed between the tread and the belt structure, bead regions **20a,20b,** and a carcass structure **22**. The carcass structure **22** comprises a first ply **30** and a second ply **32**, a gas-impervious inner liner **34,** a pair of beads **36a,36b,** a pair of bead filler apexes **38a,38b**, a first pair of crescent-shaped sidewall wedge inserts **40a,40b**, and a second pair of sidewall wedge inserts **42a,42b**. The first or innermost wedge inserts **40a,40b** are located between the inner liner **34** and the first ply **30**, and the second wedge inserts **42a,42b** are located between the first ply **30** and second ply **32**. The reinforced sidewall portions **16,18** of carcass structure **22** give the tire **10** runflat capability.

The generalized prior art runflat tire **10** shown in **FIGURE 1** illustrates the structural reinforcements in the sidewall area of a two-ply carcass design. Other runflat or EMT designs employ a single ply carcass structure. They also might use a single wedge-insert reinforcement within each sidewall, disposed between the inner liner and the single ply. In other two-ply EMT designs, a single wedge insert might be disposed within each sidewall between the two plies. Prior art runflat designs even include three-ply tires having three wedge inserts within each sidewall, as mentioned above in the Background of the Invention.

As can be seen in **FIGURE 1**, the use of the wedge inserts **40a,40b,42a**, and **42b** substantially increases the thickness of the sidewall portions **16,18** as compared to comparable non-runflat tires. The sidewalls **16,18** have more or less uniform thickness between in the bead regions **20a,20b** and the lateral most portions of the tread **12**. This generalized prior art runflat tire design exemplifies the thickened sidewalls that characterize EMT or runflat tire designs. When the tire **10** is uninflated, the insert-reinforced sidewalls **16,18** support the tire's load with minimal deflection. Such runflat tire designs provide good vehicle handling and performance under conditions of full inflation, and they provide acceptable runflat vehicle handling and runflat operational life when the tire is underinflated or uninflated. Runflat tires generally weigh more than equivalent non-runflat-capable tires, due to the reinforcing material used in the sidewall wedge inserts. Furthermore, the greater structural complexity of runflat tires adversely influences manufacturing time and quality control.

When the prior art tire **10** shown in **FIGURE** 1 is operated in a condition of low to zero inflation pressure, the portions of the sidewalls that are closest to where the tread makes contact with the ground become deflected outward axially. In non-runflat designs, this same sort of outward or axial deflection of the sidewalls also takes place, of course, but to such an extreme degree that the vehicle cannot be controlled when the tire loses pressure. The tire can even come off the rim, due to the extreme deformation of the carcass. In runflat designs, the axial deflection of the sidewalls adjacent to the ground-contacting portion of the tread is minimized by the thick, wedge-insert reinforced, sidewalls. Those skilled in the art will recognize that such axial deformation of the sidewalls gives rise to a combination of tensile and compressive stresses within the sidewalls. More specifically, the outermost portion of each sidewall experiences tensile stresses while the inner regions undergo compression stresses. Those skilled in the art will further recognize that the thicker the reinforced sidewalls are, the lower will be the maximum respective tensile and compressive stresses. However, the use of such thicker sidewall reinforcements also makes the tire heavier.

Accordingly, one way to reduce the weight of a runflat tire is to modify the design of the type of two-ply runflat design shown in **FIGURE 1**. The inner ply **30**, which is also known as the first ply (a nomenclature which follows the sequence in which the components of the tire are assembled), separates the innermost inserts **40a,40b** from the outermost inserts **42a,42b**. Within the sidewalls regions **16,18,** the first ply **30** is disposed in such a way between the respective wedge inserts as to be exposed primarily and almost exclusively to cyclical compressive stresses during normal operation but most especially during runflat operation when sidewall flexing magnitudes are maximum. It is the second ply **32** that bears the tensile stresses associated with deformation of the sidewalls **16,18.**

The exposure of the first ply **30** to compressive stresses during runflat operation of the tire, and the precise location of the first ply in relation to the respective insert reinforcements **40a,40b,42a** and **42b,** works in such a way as to enhance the combined stiffness of the wedge inserts in each sidewall. In other words, the disposition of the ply **30** between the respective wedge inserts **40a,40b,42a,** and **42b** in each sidewall gives the two wedge inserts in each sidewall a greater resistance to deformation than were the ply **30** does not separate the two wedge inserts in each sidewall. The net effect, therefore, of the ply 30 being disposed between the respective wedge inserts allows for a runflat tire design in which the total weight of the two inserts in each sidewall can be less than the corresponding weight of a single large insert affording an equivalent stiffening effect to the sidewalls of a runflat tire design.

### An Embodiment of the Present Invention

Recognizing the above described benefits of the ply **30** disposed between the respective inserts **40a,40b,42a,** and **42b** within each sidewall of the prior art runflat tire depicted in **FIGURE 1,** the present invention seeks to achieve a reduction of tire weight and a simplification of the tire's design and construction complexity by eliminating the portion of the first ply that underlies the tread **12.**

**FIGURE 2** shows a cross-sectional view of a tire **50** incorporating one embodiment of the two-part discontinuous ply or semi-ply of the present invention. The two-part semi-ply, or discontinuous ply **52** is defined by two portions **52a,52b,** each of which is disposed in the flex region of a sidewall **43,45,** respectively, of the tire **50.** The tire **50** has a tread **48,** sidewalls **43,45,** bead regions **56a,56b,** and a carcass structure which comprises a discontinuous inner first ply **52** and an outer second ply **57,** a gas-impervious innerliner **44,** a pair of beads **49a,49b,** a pair of bead filler apexes **51a,51b,** a first pair of crescent-shaped sidewall wedge inserts **58a,58b,** and a second pair of sidewall wedge inserts **59a,59b.** The first or innermost wedge inserts **58a,58b** are located between the inner liner **44** and the discontinuous first ply **52,** and the second wedge inserts **59a,59b** are located between the discontinuous first ply **52** and second ply **57.** In **FIGURE 2,** the semi-ply portion **52a** extends from the radially inwardmost position **55a** to the radially outwardmost position **53a** in sidewall **43,** while the semi-ply portion **52b** is a mirror-image version of semi-ply portion **52a** in sidewall **45.** The two ply portions **52a,52b** constitute the total discontinuous ply **52** that replaces the first ply **30** of the prior art tire **10** shown in **FIGURE 1.**

**FIGURE 3** shows a cross-sectional view of one sidewall **45** of the tire **50** shown in **FIGURE 2.** The two-layer, semi-ply portion **52b** comprises an outer fabric layer **60b** and an inner fabric layer **62b**. An inner wedge insert **58b** is separated from an outer wedge insert **59b** by the semi-ply portion **52b**. The semi-ply portion **52b** extends radially outward from the location **55b** near or in the bead region **56b** to a location **53b** near the shoulder **54b** of the sidewall **45** of the tire **50.** In other words, the semi-ply portion **52b** and its counterpart **52a** (in **FIGURE 2**) are disposed in the flex area of the sidewalls **45,43**, respectively, of the tire **50** shown in **FIGURE 2.**

In **FIGURE 3,** the discontinuous or semi-ply portion **52b** separates the first wedge insert **58b** from the second wedge insert **59b** in such a way as to afford the sidewall **45** the same stiffening benefit provided by the corresponding part of the first ply **30** in the prior art tire **10** shown in **FIGURE 1.** However, since the semi-ply portion **52b** in **FIGURE 3** is not contiguous with its mirror-image counterpart, semi-ply portion **52a** in the opposite sidewall **43** on the other side of the tire, a reduction in the weight of the tire **50** is thereby gained. In other words, the weight reduction afforded by the present invention comes about from the elimination of that portion of the prior art first ply (**30** in **FIGURE 1)** which extends across the tire's crown portion beneath the tread **12** of the tire **10.** The incorporation of such semi-ply portions **52a,52b**, as shown in **FIGURES 2** and **3**, contributes to the combined reinforcing rigidity of each sidewall **43,45** as brought about primarily by the use of two wedge inserts **58a,58b,59a** and **59b** shown in **FIGURE 2**.

The discontinuous ply portion **52b** illustrated in **FIGURE 3** comprises two fabric layers **60b,62b,** each of which comprises parallel-aligned fibers or cords made of materials from the class of materials that includes nylon and rayon. **FIGURE 4** shows the fabric layers **64,66** and their respective parallel-aligned cords **65,67.** The parallel-aligned cords **65,67** have respective bias angles β and α, as shown in **FIGURE 4**. The bias angles β and α are measured with respect to the radial direction and they are approximately equal in magnitude. The angles β and α are preferably between 40 degrees and 65 degrees relative to the radial direction, and most preferably between 45 degrees and 55 degrees. Below 40 degrees, the parallel aligned ends **65,67** are not able to adequately withstand the compression generated on the sidewalls and shoulders and thereby can allow the cords to buckle because they do not remain in the tension mode. Alternatively, we do not want to exceed 65 degrees because of limitations in the manufacturing process. In other words, the bias angles of the parallel-aligned cords **65,67** of fabric layers **64,66,** respectively, are oriented at crossed bias angles that are more or less equal in magnitude with respect to the radial direction, but opposite in direction, as shown in **FIGURE 4.**

The two fabric layers **60b,62b** shown in **FIGURE 3** are encapsulated between the two rubber wedge inserts **58b,59b.** Thus located, the discontinuous ply **52 (FIGURE 2)** contributes compression stiffness to the two wedge inserts of the sidewalls **43,45** shown in **FIGURE 2.** The increased bending stiffness thus afforded to the sidewalls gives the tire runflat mobility with reduced sidewall bending deflection. Overall tire weight is also reduced compared to the typical prior art tire **10** shown in **FIGURE 1**.

The embodiments shown in **FIGURES 3** and **4** are applicable to monoply carcasses in which the single continuous second ply **57** (in **FIGURES 2** and **3**) can be reinforced with more or less radially oriented fibers or cords made of either organic fibers or metal. **FIGURES 3** shows the embodiment of the invention within sidewall portion **45** wherein the continuous monoply segment **57** is built according to the standard construction wherein apexe **51b** (and their unshown mirror image counterparts) is included near the bead regions **56b**

### LOCKED TIE-IN CONSTRUCTION

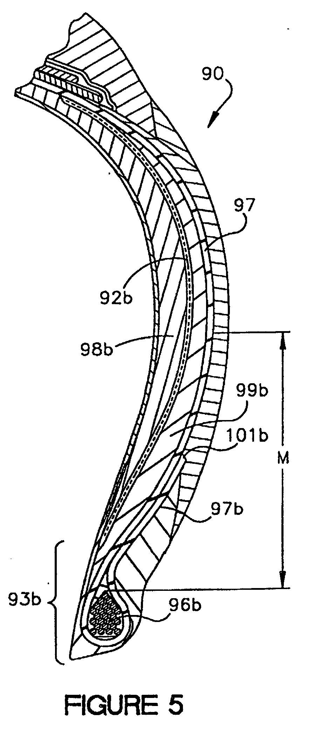

**FIGURE 5** shows an embodiment of the invention in which a tire sidewall region **90** is built according to the locked tie-in method of construction. In the locked tie-in construction method, the single continuous ply **97** wraps around the bead **96b** (and its counterpart, unshown) in such a way that the apexes 51a, 51b of the embodiments, shown in **FIGURES 2**, and **3**, are effectively eliminated from the bead region **93b.** That is, the turn-up ends **97b** (and its counterpart, unshown on the other side of the tire) of the continuous carcass ply **97** are assembled in such a way as to make the turn-up ends ( **97b**) more or less contiguous with the main structural portion of ply **97**, which extends between bead regions **93b,** of the continuous carcass ply **97.** The free end **101b** of ply turn-up end **97b** extends from a location above the bead **96b** upward to the mid-height of the sidewall **90.** In this embodiment, the discontinuous ply portion **92b** (and its unshown counterpart) is, as in the previous embodiments, disposed radially across the sidewall flex area of the sidewall **90** between a first sidewall wedge insert **98b** and a second sidewall wedge insert **99b,** all located inside a second, outer carcass ply **97**. The discontinuous ply **92b** shown in **FIGURE 5** can be of the fabric type displayed in **FIGURES 2, 3** and **4.**

## Claims

1. A pneumatic radial ply runflat tire having a tread (**48**), two sidewalls (**43,45;90**), a carcass comprising an outer radial carcass ply (**57;97**), two bead regions (**56a,56b;93b**) each containing inextensible annular beads (**49a,49b,96b**), a two part discontinuous ply (**52;92b**) with one portion (**52a, 52b;92b**) contained in each sidewall and disposed between two wedge inserts (**58a, 59a; 58b, 59b;98b,99b**), and one or more belts located between the tread (**48**) and the radial carcass ply, the tire being **characterized in that**:
- each of the two portions (**52a,52b,92b**) of the two-part discontinuous ply is made from two layers (**64, 66**) of cross-biased fabric;
- each of the cross-biased fabric layers (**64,66**) is made of parallel-aligned cords (**65,67**);
- the parallel-aligned cords (**65**) of the first fabric layer (**64**) are each oriented at an angle with respect to the radial direction that is approximately equal in magnitude but opposite in direction to the parallel-aligned cords (**67**) of the second fabric layer (**66**) of the two layers of cross-biased fabric; and
- the parallel aligned cords (**65,67**) of the respective fabric layers (**64,66**) are oriented at angles (α,β) of between 40 degrees and 65 degrees with respect to the radial direction.

2. The tire of claim 1 **characterized in that** the parallel-aligned cords (6**5,67**) of the respective fabric layers (**64, 66**) are made from materials that contain nylon and rayon.

3. The tire of claim 1 **characterized in that** the cords (65,67) are oriented at angles of between 45 and 55 degrees.

4. The tire of claim 1 **characterized in that** the two-part discontinuous ply portions (**92a, 92b**) are incorporated in a tire where the turn-up ends (**97a, 97b**) of the radial carcass ply (**97**) are substantially contiguous with the main structural portion of the carcass ply (**97**), which extends between the two bead region (**93a, 93b**).

5. The tire of claim 4 **characterized in that** the free ends **(101a, 101b)** of the ply turn up ends (**97a,97b**) extend from above the corresponding bead **(96a,96b)** toward the mid-height of the sidewall (**90**).

6. The tire of claim 1 **characterized in that** the carcass ply (**57**) is reinforced with more or less radially oriented fibers or cords made of either organic fibers or metal.

## Patentansprüche

1. Notlaufradialluftreifen mit einem Laufstreifen (48), zwei Seitenwänden (43, 45; 90), einer Karkasse, die eine äußere radiale Karkasslage (57; 97) umfasst, zwei Wulstbereichen (56a, 56b; 93b), wovon jeder nicht ausdehnbare ringförmige Wülste (49a, 49b; 96b) enthält, einer zweiteiligen, unterbrochenen Lage (52; 92b), wovon ein Abschnitt (52a, 52b; 92b) in jeder Seitenwand enthalten und zwischen zwei Keileinsätzen (58a, 59a; 58b, 59b; 98b, 99b) angeordnet ist, und einem oder mehreren Gürteln, die sich zwischen dem Laufstreifen (48) und der radialen Karkasslage befinden, **dadurch gekennzeichnet, dass**:
- jeder der zwei Abschnitte (52a, 52b; 92b) der zweiteiligen, unterbrochenen Lage aus zwei Schichten (64, 66) aus einem kreuzförmig geneigten Gewebe gefertigt ist;
- jede der kreuzförmig geneigten Gewebeschichten (64, 66) aus parallel ausgerichteten Korden (65, 67) besteht;
- die parallel ausgerichteten Korde (65) der ersten Gewebeschicht (64) jeweils unter einem Winkel in Bezug auf die radiale Richtung orientiert sind, der in der Größe etwa gleich, jedoch in der Richtung zu den parallel ausgerichteten Korden (67) der zweiten Gewebeschicht (66) der zwei Schichten aus einem kreuzförmig geneigten Gewebe entgegengesetzt ist; und
- die parallel ausgerichteten Korde (65, 67) der jeweiligen Gewebeschichten (64, 66) unter Winkeln (α, β) zwischen 40° und 65° in Bezug auf die radiale Richtung orientiert sind.

2. Reifen nach Anspruch 1, **dadurch gekennzeichnet, dass** die parallel ausgerichteten Korde (65, 67) der jeweiligen Gewebeschichten (64, 66) aus Materialien gefertigt sind, die Nylon und Reyon enthalten.

3. Reifen nach Anspruch 1, **dadurch gekennzeichnet, dass** die Korde (65, 67) unter Winkeln zwischen 45° und 55° orientiert sind.

4. Reifen nach Anspruch 1, **dadurch gekennzeichnet, dass** die zweiteiligen, unterbrochenen Lagenabschnitte (92a, 92b) in einem Reifen dort enthalten sind, wo die Umschlagenden (97a, 97b) der radialen Karkasslage (97) an deren Hauptstrukturabschnitt, der sich zwischen dem Zweiwulstabschnitt (93a, 93b) erstreckt, im Wesentlichen angrenzen.

5. Reifen nach Anspruch 4, **dadurch gekennzeichnet, dass** sich die freien Enden (101a, 101b) der Lagenumschlagenden (97a, 97b) von oberhalb des entsprechenden Wulstes (96a, 96b) zur Mitte der Höhe der Seitenwand (90) erstrecken.

6. Reifen nach Anspruch 1, **dadurch gekennzeichnet, dass** die Karkasslage (57) mit mehr oder weniger radial orientierten Fasern oder Korden, die entweder aus organischen Fasern oder aus Metall gefertigt sind, verstärkt ist.

## Revendications

1. Bandage pneumatique à nappe radiale permettant de rouler à plat comportant une bande de roulement (48), deux flancs (43, 45 ; 90), une carcasse comprenant une nappe de carcasse radiale externe (57 ; 97), deux régions de talons (56a, 56b ; 93b) contenant chacune des talons annulaires inextensibles (49a, 49b ; 96b), une nappe discontinue en deux parties (52 ; 92b) dont une portion (52a, 52b ; 92b) est contenue dans chaque flanc et est disposée entre deux pièces rapportées cunéiformes (58a, 59a ; 58b, 59b ; 98b, 99b), et une ou plusieurs ceintures disposées entre la bande de roulement (48) et la nappe de carcasse radiale, le bandage pneumatique étant **caractérisé en ce que** :
- chacune des deux portions (52a, 52b ; 92b) de la nappe discontinue en deux parties est constituée par deux couches (64, 66) de tissu en fils croisés ;
- chacune des couches de tissu en fils croisés (64, 66) est constituée par des câblés (65, 67) disposés en alignement parallèle ;
- les câblés (65) disposés en alignement parallèle de la première couche de tissu (64) sont chacun orientés en formant un angle par rapport à la direction radiale, qui est approximativement égal en ce qui concerne sa valeur, mais dont la direction est opposée à celle des câblés (67) disposés en alignement parallèle de la deuxième couche de tissu (66) des deux couches de tissu en fils croisés ;
- les câblés (65, 67) disposés en alignement parallèle des couches respectives de tissu (64, 66) sont orientés en formant des angles (α, β) entre 40 degrés et 65 degrés par rapport à la direction radiale.

2. Bandage pneumatique selon la revendication 1,
**caractérisé en ce que** les câblés (65, 67) disposés en alignement parallèle des couches de tissu respectives (64, 66) sont constitués par des matières qui contiennent du nylon et de la rayonne.

3. Bandage pneumatique selon la revendication 1,
**caractérisé en ce que** les câblés (65, 67) sont orientés en formant des angles entre 45 et 55 degrés.

4. Bandage pneumatique selon la revendication 1,
**caractérisé en ce que** les portions (92a, 92b) de la nappe discontinue en deux parties sont incorporées dans un bandage pneumatique dans lequel les extrémités de retournement vers le haut (97a, 97b) de la nappe de carcasse radiale (97) sont disposées en position essentiellement contiguë avec la portion de structure principale de la nappe de carcasse (97) qui s'étend entre les deux régions de talons (93a, 93b).

5. Bandage pneumatique selon la revendication 4,
**caractérisé en ce que** les extrémités libres (101a, 101b) des extrémités (97a, 97b) de retournement vers le haut de la nappe s'étendent depuis le talon correspondant (96a, 96b) jusqu'à mi-hauteur du flanc (90).

6. Bandage pneumatique selon la revendication 1,
**caractérisé en ce que** la nappe de carcasse (57) est renforcée avec des fibres ou des câblés constitués soit par des fibres organiques, soit par du métal, qui sont orientés dans une direction plus ou moins radiale.
